# EUROPÄISCHE PATENTSCHRIFT

(11) **EP 3 030 479 B1**
(45) Veröffentlichungstag und Bekanntmachung des Hinweises auf die Patenterteilung: **09.08.2017**
(21) Anmeldenummer: 14733119.3
(22) Anmeldetag: 18.06.2014
(51) Int. Cl.: B62M 6/45

(54) **VERFAHREN ZUM STEUERN EINES ELEKTRISCHEN ANTRIEBS EINES MIT MUSKELKRAFT UND/ODER MOTORKRAFT BETREIBBAREN FAHRZEUGS SOWIE DERARTIGES FAHRZEUG**
METHOD FOR CONTROLLING AN ELECTRIC DRIVE OF A VEHICLE WHICH CAN BE OPERATED USING MUSCLE POWER AND/OR MOTOR POWER, AND VEHICLE OF THIS KIND
PROCÉDÉ DE COMMANDE D'UN ENTRAÎNEMENT ÉLECTRIQUE D'UN VÉHICULE POUVANT ÊTRE ENTRAÎNÉ PAR LA FORCE MUSCULAIRE ET/OU UNE FORCE MOTRICE ET UN TEL VÉHICULE

(30) Priorität: 06.08.2013 DE 102013215487
(43) Veröffentlichungstag der Anmeldung: 15.06.2016
(73) Patentinhaber: Robert Bosch GmbH, 70442 Stuttgart (DE)
(72) Erfinder: STEGMAIER, Juergen, 71638 Ludwigsburg (DE)
(86) Internationale Anmeldenummer: PCT/EP2014/062790
(87) Internationale Veröffentlichungsnummer: WO 2015/018554

(56) Entgegenhaltungen:
- EP-A1- 0 893 338
- EP-A1- 2 447 108
- EP-A1- 2 537 739
- JP-A- H0 733 070
- JP-A- 2002 240 772
- JP-A- 2002 264 882
- JP-A- 2004 243 920

## Beschreibung

### Stand der Technik

Die vorliegende Erfindung betrifft ein Verfahren zum Steuern eines elektrischen Antriebs eines mit Muskelkraft und/oder Motorkraft betreibbaren Fahrzeugs, insbesondere eines Elektrofahrrads, beansprucht im Anspruch 1, sowie ein derartiges Fahrzeug, beansprucht im Anspruch 7. Elektrische und/oder mit Muskelkraft betreibbare Fahrzeuge sind aus dem Stand der Technik in unterschiedlichen Ausgestaltungen bekannt. Hierbei gibt es beispielsweise Elektrofahrräder, bei denen der elektrische Antrieb im Bereich des Tretlagers angeordnet ist (Mittelmotorkonzept). Über ein Kettenblatt und eine Kette kann dann ein Hinterrad angetrieben werden. Der elektrische Antrieb ist dabei üblicherweise durch einen Freilauf vom Abtrieb entkoppelt. Hierbei ist es möglich, dass der elektrische Antrieb stoßartig in die Abtriebsseite eingekoppelt wird, wodurch es zu großen Kraft- und Drehmomentspitzen im Antriebsstrang kommen kann. Dies ist beispielsweise der Fall, wenn das Elektrofahrrad rollt und der Fahrer aus dem rollenden Zustand mit Muskelkraft beginnt zu pedalieren und der elektrische Antrieb zugeschaltet werden soll. Die EP-A-0 893 338 wird als nächstliegender Stand der Technik angesehen und offenbart die Merkmale des Oberbegriffs des Anspruchs 7.

### Offenbarung der Erfindung

Das erfindungsgemäße Verfahren zum Steuern eines elektrischen Antriebs eines mit Muskelkraft und/oder Motorkraft betreibbaren Fahrzeugs mit den Merkmalen des Anspruchs 1 weist demgegenüber den Vorteil auf, dass ein sanftes und ruckfreies Einkoppeln des elektrischen Antriebs möglich ist. Hierbei kommt es insbesondere nicht zu unerwünschten Kraftspitzen und/oder Drehmomentspitzen, so dass mechanische Bauteile des Antriebssystems nicht unnötigerweise durch Stöße oder dgl. belastet werden. Ferner kann das erfindungsgemäße Verfahren kostengünstig und schnell durchgeführt werden. Erfindungsgemäß wird hierbei bei einem Fahrzeug, bei dem ein Kurbeltrieb vorgesehen ist und ein elektrischer Antrieb am Kurbeltrieb angeordnet ist, z.B. ein Elektrofahrrad mit Mittelmotor, in einem ersten Schritt bestimmt, ob eine Fahrsituation vorhanden ist, bei der der elektrische Antrieb zugeschaltet werden soll. Anschließend wird der elektrische Antrieb hochgefahren, wobei das Hochfahren zuerst mit einem ersten Gradienten und anschließend mit einem zweiten Gradienten erfolgt. Dabei ist der erste Gradient größer als der zweite Gradient. Somit wird erfindungsgemäß das Hochfahren des elektrischen Antriebs mit unterschiedlichen Gradienten ausgeführt, was zu einem sanften Zuschalten des elektrischen Antriebs zum durch den Fahrer betätigten Kurbeltrieb führt. Da der erste Gradient höher als der zweite Gradient ist, wird durch das erfindungsgemäße Verfahren somit erreicht, dass der elektrische Antrieb in einer möglichst kurzen Zeit eine möglichst hohe Drehzahl erreicht. Hierdurch kann in kürzester Zeit eine ungefähre Anpassung der Drehzahl des elektrischen Antriebs und des durch den Fahrer mit Muskelkraft betätigbaren Kurbeltriebs erreicht werden.

Die Unteransprüche zeigen bevorzugte Weiterbildungen der Erfindung.

Vorzugsweise wird der elektrische Antrieb mit dem ersten Gradienten so lange hochgefahren, dass eine Drehzahl des elektrischen Antriebs immer kleiner ist als eine minimale Drehzahl der Gangschaltung, insbesondere, bis ca. 90% der Zieldrehzahl erreicht sind. Hierdurch können Stöße oder dgl. beim Einkoppeln des elektrischen Antriebs zum muskelbetriebenen Kurbeltrieb praktisch vermieden werden.

Besonders bevorzugt wird der erste und/oder zweite Gradient und/oder ein Umschaltzeitpunkt vom ersten zum zweiten Gradienten, basierend auf einem Übersetzungsverhältnis einer Gangschaltung des Fahrzeugs, bestimmt. Die Bestimmung, basierend auf dem Übersetzungsverhältnis der Gangschaltung, ermöglicht ein sehr sanftes Einkoppeln des elektrischen Antriebs, da bei einem kleinen eingelegten Gang die Zieldrehzahl des elektrischen Antriebs grundsätzlich hoch ist und bei einem großen eingelegten Gang die Zieldrehzahl des elektrischen Antriebs grundsätzlich gering ist.

Vorzugsweise kann das tatsächliche (genaue) Übersetzungsverhältnis der Gangschaltung bestimmt werden, beispielsweise durch Verwendung eines Gangwahlsensors. Hierzu ist jedoch ein zusätzlicher Gangwahlsensor notwendig, was zu Kostennachteilen führt.

Alternativ oder zusätzlich wird das Übersetzungsverhältnis dadurch bestimmt, dass ein vom Hersteller des Fahrzeugs abgespeichertes minimales Übersetzungsverhältnis und maximales Übersetzungsverhältnis in einem Speicher abgelegt ist und eine Steuereinheit die ersten und zweiten Gradienten und/oder einen Umschaltzeitpunkt, basierend auf diesen gespeicherten Werten, bestimmt. Da bei dieser Variante die tatsächliche Gangwahl und das tatsächliche Übersetzungsverhältnis nicht bekannt sind, ergibt sich ein gewisser unscharfer Bereich. Erfindungsgemäß wird nun dieser unscharfe Bereich in den Bereich des zweiten Gradienten gelegt, bei dem die Drehzahl des elektrischen Antriebs entsprechend der Gradientenlimitierung langsamer ansteigt, bis eine Zieldrehzahl erreicht ist. Dadurch können Stöße oder dgl. mit großer Wahrscheinlichkeit verhindert werden.

Weiter bevorzugt wird zusätzlich oder alternativ der erste und/oder zweite Gradient und/oder der Umschaltzeitpunkt, basierend auf einer Fahrzeuggeschwindigkeit bestimmt. Dies kann üblicherweise ohne Zusatzkosten erfolgen, da derartige Fahrzeuge häufig eine Sensorik zur Bestimmung der Geschwindigkeit aufweisen.

Weiter bevorzugt und/oder alternativ werden der erste und zweite Gradient und/oder der Umschaltzeitpunkt, basierend auf einer Drehzahl des Kurbeltriebs, welche durch einen Fahrer mittels Muskelkraft bereitgestellt wird und/oder eines Drehmoments des Kurbeltriebs, bestimmt.

Um ein möglichst stoßfreies Zuschalten des elektrischen Antriebs zu ermöglichen, wird vorzugsweise der erste Gradient zeitlich kürzer als der zweite Gradient beim Hochfahren des elektrischen Antriebs beibehalten.

Weiter bevorzugt wird zwischen dem ersten Gradient und dem zweiten Gradient ein kontinuierlicher Übergang vorgesehen. Dadurch kann eine sanfte Änderung des Gradienten erfolgen.

Weiter bevorzugt wird das Hochfahren des elektrischen Antriebs mit dem ersten Gradienten und/oder dem zweiten Gradienten nur über einen vorbestimmten Zeitraum ausgeführt.

Weiter bevorzugt wird das erfindungsgemäße Verfahren derart ausgeführt, dass die Zieldrehzahl innerhalb von 100 ms erreicht ist. Weiter bevorzugt kann der elektrische Antrieb auch mit drei oder mehr unterschiedlichen Gradienten hochgefahren werden. Dadurch erhöht sich jedoch grundsätzlich der Steuerungsbedarf.

Ferner betrifft die vorliegende Erfindung noch ein mit Muskelkraft und/oder Motorkraft betreibbares Fahrzeug, insbesondere ein Elektrofahrrad, mit einem Kurbeltrieb und einem elektrischen Antrieb, welcher im Bereich des Kurbeltriebs angeordnet ist (Mittelmotorkonzept). Ferner umfasst das Fahrzeug eine Steuereinheit, welche eingerichtet ist, den elektrischen Antrieb hochzufahren. Das Hochfahren des elektrischen Antriebs erfolgt dabei mit wenigstens einem ersten und zweiten Gradienten, wobei der erste Gradient größer als der zweite Gradient ist.

Weiter bevorzugt umfasst das Fahrzeug eine Gangschaltung und einen Speicher, wobei im Speicher ein maximales und/oder minimales Übersetzungsverhältnis der Gangschaltung abgespeichert ist. Die Steuereinheit ist dabei eingerichtet, den ersten und zweiten Gradienten und/oder einen Umschaltzeitpunkt, basierend auf dem maximalen und/oder minimalen Übersetzungsverhältnis der Gangschaltung, zu bestimmen.

Alternativ oder zusätzlich umfasst das Fahrzeug ferner einen Sensor zur Erfassung des tatsächlichen Übersetzungsverhältnisses, beispielsweise einen Gangwahlsensor.

Weiter bevorzugt umfasst das Fahrzeug ferner einen Geschwindigkeitssensor, welcher eine Geschwindigkeit des Fahrzeugs erfasst, wobei die Steuereinheit eingerichtet ist, den ersten und/oder zweiten Gradienten und/oder den Umschaltzeitpunkt, basierend auf der Geschwindigkeit des Fahrzeugs, zu bestimmen.

Gemäß einer weiteren bevorzugten Ausgestaltung der Erfindung umfasst das Fahrzeug ferner einen Drehzahlsensor, welcher eine Drehzahl des mit Muskelkraft betreibbaren Kurbeltriebs erfasst und basierend auf diesem erfassten Wert den ersten und/oder zweiten Gradienten und/oder den Umschaltzeitpunkt bestimmt.

Weiter alternativ umfasst das Fahrzeug einen Drehmomentsensor, welcher ein Drehmoment des mit Muskelkraft betreibbaren Kurbeltriebs erfasst und die Steuereinheit ist eingerichtet, den ersten und/oder zweiten Gradienten und/oder den Umschaltzeitpunkt, basierend auf dem erfassten Wert des Drehmoments am Kurbeltrieb, zu bestimmen.

Das erfindungsgemäße Fahrzeug ist vorzugsweise ein Elektrofahrrad. Die Erfindung ermöglicht dabei beim Betrieb des Elektrofahrrads ein praktisch ruck- und stoßfreies Zuschalten des elektrischen Antriebs bei allen möglichen Fahrsituationen und insbesondere auch der Fahrsituation, da sich das Fahrzeug im rollenden Zustand befindet und der Fahrer mit dem Pedalieren beginnt und der elektrische Antrieb zugeschaltet werden soll.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Darstellung eines Elektrofahrrads gemäß einem ersten Ausführungsbeispiel der Erfindung; und
- Figur 2: ein Diagramm, welches eine Drehzahl n des elektrischen Antriebs über der Zeit t beim Hochfahren des elektrischen Antriebs darstellt.

### Bevorzugte Ausführungsform der Erfindung

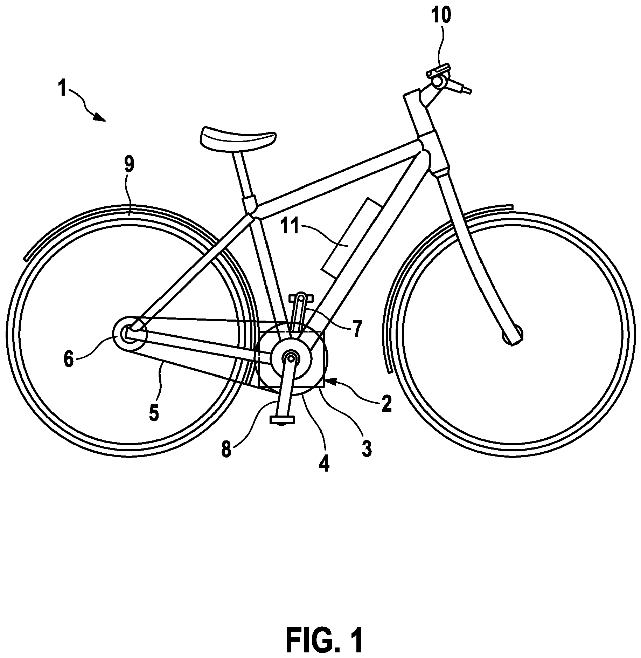

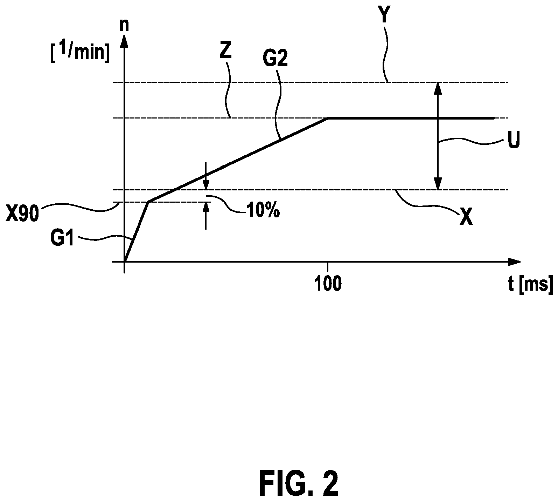

Nachfolgend wird unter Bezugnahme auf die Figuren 1 und 2 ein Elektrofahrrad 1 gemäß einem ersten bevorzugten Ausführungsbeispiel der Erfindung im Detail beschrieben.

Wie aus Figur 1 ersichtlich ist, umfasst das Elektrofahrrad 1 einen Kurbeltrieb 2 mit zwei Kurbeln 7, 8, an dem Pedale angeordnet sind. Ein elektrischer Antrieb 3 ist in dem Kurbeltrieb 2 integriert. Am Hinterrad 9 ist eine Gangschaltung 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf Ritzel der Gangschaltung 6 übertragen.

Am Lenker des Fahrrads ist ferner eine Steuereinheit 10 angeordnet, welche mit dem elektrischen Antrieb 3 verbunden ist. Das Bezugszeichen 11 bezeichnet eine Batterie, welche zur Stromversorgung des elektrischen Antriebs 3 dient.

Die Steuereinheit 10 ist nun derart eingerichtet, dass der elektrische Antrieb 3 auf eine Zieldrehzahl Z hochgefahren wird. Dies ist schematisch im Diagramm von Figur 2 gezeigt. Die Zieldrehzahl Z liegt dabei immer zwischen einer minimalen Drehzahl X, wenn der höchste Gang am Fahrrad eingelegt ist und einer maximalen Drehzahl Y, wenn der kleinste Gang der Gangschaltung des Elektrofahrrads eingelegt ist.

Figur 2 zeigt dabei die Drehzahl n in 1/min über der Zeit t in ms.

Die Steuereinheit 10 ist nun derart eingerichtet, dass ein Hochfahren auf die Zieldrehzahl Z mittels eines ersten Gradienten G1 und eines zweiten Gradienten G2 erfolgt. Der erste Gradient G1 ist dabei größer als der zweite Gradient G2. Dies ist unmittelbar aus Figur 2 ersichtlich, wobei die Kurve G1 des ersten Gradienten steiler als die Kurve G2 des zweiten Gradienten ist.

Gemäß diesem Ausführungsbeispiel wird nun das Hochfahren des elektrischen Antriebs 3 derart realisiert, dass der erste Gradient G1 bis ca. 90% der minimalsten Drehzahl X der Gangschaltung hochgefahren wird. Anschließend wird der elektrische Antrieb 3 mit der geringeren Steigung des zweiten Gradienten G2 auf die Zieldrehzahl Z hochgefahren. Hierdurch wird sichergestellt, dass kein ruckartiges Einkoppeln des elektrischen Motors auftritt, da der elektrische Motor 3 bis maximal 90% der minimalen Drehzahl X schnell mit dem ersten Gradienten G1 hochgefahren wird. Anschließend erfolgt ein langsameres Hochfahren mittels des zweiten Gradienten G2, der eine deutlich flachere Steigung aufweist. Die Zieldrehzahl Z ist nach ungefähr 100 ms erreicht.

Somit ist die erfindungsgemäße Steuereinrichtung 10 eingerichtet, zuerst mit einem hohen Gradienten G1 auf eine Drehzahl kurz unterhalb der minimalen Drehzahl X der Gangschaltung des Elektrofahrrads hochzubeschleunigen und anschließend mit einem kleineren Gradienten G2 auf eine gewünschte Drehzahl zu beschleunigen. Die minimale und maximale Drehzahl im kleinsten bzw. größten Gang der Gangschaltung 6 ist vorab in einem Speicher der Steuereinheit 10 abgespeichert worden. Ebenfalls können der erste Gradient G1 und der zweite kleinere Gradient G2 fest in der Steuereinheit abgespeichert werden. Alternativ kann die Steuereinheit 10 jedoch auch eine aktuelle Fahrgeschwindigkeit bestimmen und basierend auf der aktuellen Fahrgeschwindigkeit die Steigungen für den ersten und zweiten Gradienten G1, G2 bestimmen. Weiter alternativ oder zusätzlich kann hierzu auch ein von einem Fahrer beigesteuertes Antriebsdrehmoment zur Bestimmung der Gradienten G1 und G2 hinzugezogen werden. Dies macht beispielsweise dann Sinn, wenn im Elektrofahrrad sowieso ein derartiger Drehmomentsensor zur Erfassung eines vom Fahrer aufgebrachten Drehmoments eingebaut ist. Somit können erfindungsgemäß auch Werte des Elektrofahrrads, welche durch vorhandene Sensoren sowieso schon erfasst werden, zusätzlich noch zum Hochfahren des elektrischen Antriebs 3 verwendet werden.

Erfindungsgemäß wird bevorzugt auch ein Umschaltzeitpunkt, bei dem die Steuereinheit 10 vom ersten zum zweiten Gradienten umschaltet, in Abhängigkeit des minimalen und/oder maximalen Übersetzungsverhältnisses bestimmt.

Da bei dem erfindungsgemäßen Beispiel die tatsächliche Gangwahl nicht bekannt ist, entsteht ein Unschärfebereich U, welcher zwischen der minimalen Drehzahl X und der maximalen Drehzahl Y der Gangschaltung 6 liegt.

Erfindungsgemäß kann somit ein sanftes und ruckarmes Einkoppeln des elektrischen Antriebs 3 in den Kurbeltrieb 2 erfolgen. Hierdurch ergibt sich eine Schonung von mechanischen Komponenten des Elektrofahrrads, insbesondere von Getriebebauteilen und Freiläufen und dgl. Besonders bevorzugt verwendet die Steuereinheit 10 zur Bestimmung der Gradienten G1 und G2 zum Hochfahren des elektrischen Antriebs 3 dabei keine zusätzlichen Sensorsignale, sondern kann bereits vorhandene Sensorsignale, wie insbesondere eine Fahrzeuggeschwindigkeit und/oder ein vom Fahrer aufgebrachtes Drehmoment und/oder eine Drehzahl am Kurbeltrieb, verwenden. Der tatsächliche Eingriff des elektrischen Antriebs 3 erfolgt dann mit geringem Gradienten G2 sanft und ohne schädigende Wirkung von Bauteilen.

## Patentansprüche

1. Verfahren zum Steuern eines elektrischen Antriebs (3) eines mit Muskelkraft und/oder Motorkraft betreibbaren Fahrzeugs (1), insbesondere Elektrofahrrads, wobei das Fahrzeug (1) einen Kurbeltrieb (2) umfasst und der elektrische Antrieb (3) am Kurbeltrieb (2) angeordnet ist, umfassend die Schritte:
- Bestimmen einer Fahrsituation, bei der der elektrische Antrieb (3) verwendet werden soll, und
- Hochfahren des elektrischen Antriebs (3) auf eine Zieldrehzahl (Z) zuerst mit einem ersten Drehzahlgradienten (G1) und anschließend mit einem zweiten Drehzahlgradienten (G2), wobei der erste Drehzahlgradient (G1) größer ist als der zweite Drehzahlgradient (G2),
- Einkoppeln des elektrischen Antriebs (3) in den Kurbeltrieb (2) mit dem zweiten Drehzahlgradienten (G2).

2. Verfahren nach Anspruch 1, wobei das Fahrzeug eine Gangschaltung mit einer minimalen Übersetzung, die eine Maximal-Drehzahl (Y) bereitstellt und einer maximalen Übersetzung, die eine minimale Drehzahl (X) bereitstellt, aufweist, wobei der elektrische Antrieb (3) mit dem ersten Gradienten (G1) auf einen prozentualen Anteil kleiner als 100%, insbesondere auf 90%, der minimalen Drehzahl (X) hochgefahren wird.

3. Verfahren nach einem der vorhergehenden Ansprüche, **dadurch gekennzeichnet, dass** eine Steuereinheit den ersten Gradienten (G1) und/oder den zweiten Gradienten (G2) und/oder einen Umschaltzeitpunkt vom ersten zum zweiten Gradienten, basierend auf einem Übersetzungsverhältnis einer Gangschaltung des Fahrzeugs, bestimmt.

4. Verfahren nach Anspruch 3, **dadurch gekennzeichnet, dass**
- die Steuereinheit den ersten und/oder zweiten Gradienten (G1, G2) und/oder den Umschaltzeitpunkt vom ersten zum zweiten Gradienten, basierend auf einem maximalen und/oder minimalen Übersetzungsverhältnis der Gangschaltung des Fahrzeugs bestimmt, oder
- dass das Übersetzungsverhältnis, basierend auf einem aktuellen mittels eines Sensors erfassbaren Übersetzungsverhältnisses bestimmt wird.

5. Verfahren nach einem der vorhergehenden Ansprüche, **dadurch gekennzeichnet, dass** der erste Gradient (G1) und/oder der zweite Gradient (G2) und/oder der Umschaltzeitpunkt,
- basierend auf einer Fahrzeuggeschwindigkeit, und/oder
- eines Drehmoments, welches durch Muskelkraft am Kurbeltrieb (2) bereitgestellt wird, und/oder
- basierend auf einer Drehzahl, welche durch Muskelkraft am Kurbeltrieb (2) bereitgestellt wird,
bestimmt wird.

6. Verfahren nach einem der vorhergehenden Ansprüche, **dadurch gekennzeichnet, dass** das Hochfahren des elektrischen Antriebs (3) mit dem ersten Gradienten (G1) und/oder dem zweiten Gradienten (G2) nur über einen vorbestimmten Zeitraum ausgeführt wird.

7. Mit Muskelkraft und/oder Motorkraft betreibbares Fahrzeug, insbesondere Elektrofahrrad, umfassend:
- einen Kurbeltrieb (2),
- einen elektrischen Antrieb (3),
- wobei der elektrische Antrieb (3) im Bereich des Kurbeltriebs (2) angeordnet ist, und
- eine Steuereinheit (10),
- **dadurch gekennzeichnet dass** die Steuereinheit (10) eingerichtet ist, den elektrischen Antrieb (3) hochzufahren auf eine Zieldrehzahl (Z),
- wobei das Hochfahren zuerst mit einem ersten Drehzahlgradienten (G1) und anschließend mit einem zweiten Drehzahlgradienten (G2) erfolgt, und
- wobei der erste Drehzahlgradient (G1) größer als der zweite Drehzahlgradient (G2) ist, und
- wobei das Einkoppeln des elektrischen Antriebs (3) in den Kurbeltrieb (2) mit dem zweiten Drehzahlgradienten (G2) erfolgt.

8. Fahrzeug nach Anspruch 7, ferner umfassend eine Gangschaltung (6) und einen Speicher, welcher ein maximales und/oder ein minimales Übersetzungsverhältnis der Gangschaltung speichert, wobei die Steuereinheit (10) eingerichtet ist, den ersten Gradienten (G1) und/oder den zweiten Gradienten (G2), basierend auf dem maximalen und/oder minimalen Übersetzungsverhältnis der Gangschaltung (6) zu bestimmen.

9. Fahrzeug nach Anspruch 7 oder 8, ferner umfassend einen Geschwindigkeitssensor, welcher eine Geschwindigkeit des Fahrzeugs (1) erfasst, wobei die Steuereinheit (10) eingerichtet ist, den ersten Gradienten (G1) und/oder den zweiten Gradienten (G2), basierend auf der Geschwindigkeit des Fahrzeugs zu bestimmen.

10. Fahrzeug nach einem der Ansprüche 7 bis 9, ferner umfassend einen Drehzahlsensor, welcher einen durch Muskelkraft am Kurbeltrieb (2) aufgebrachte Drehzahl erfasst und/oder einen Drehmomentsensor, welcher ein durch Muskelkraft am Kurbeltrieb (2) aufgebrachtes Drehmoment erfasst, wobei die Steuereinheit (10) eingerichtet ist, den ersten Gradienten (G1) und/oder den zweiten Gradienten (G2), basierend auf der erfassten Drehzahl und/oder dem erfassten Drehmoment am Kurbeltrieb (2) zu bestimmen.

11. Fahrzeug nach einem der Ansprüche 7 bis 10, ferner umfassend einen Sensor zur Erfassung eines tatsächlichen Übersetzungsverhältnisses einer Gangschaltung (6), insbesondere einen Gangwahlsensor, welcher einen aktuell eingelegten Gang erfasst.

## Claims

1. Method for controlling an electric drive (3) of a vehicle (1) which can be operated using muscle power and/or motor power, in particular an electric bicycle, wherein the vehicle (1) comprises a crank drive (2), and the electric drive (3) is arranged on the crank drive (2), comprising the steps:
- determining a travel situation in which the electric drive (3) is to be used, and
- powering up the electric drive (3) to a target rotational speed (Z), firstly with a first rotational speed gradient (G1) and subsequently with a second rotational speed gradient (G2), wherein the first rotational speed gradient (G1) is greater than the second rotational speed gradient (G2), and
- inputting the electric drive (3) into the crank drive (2) with the second rotational speed gradient (G2).

2. Method according to Claim 1, wherein the vehicle has a gearshift with a minimum transmission ratio which makes available a maximum rotational speed (Y), and with a maximum transmission ratio which makes available a minimum rotational speed (X), wherein the electric drive (3) is powered up with the first gradient (G1) to a percentage of less than 100%, in particular of 90%, of the minimum rotational speed (X).

3. Method according to one of the preceding claims, **characterized in that** a control unit determines the first gradient (G1) and/or the second gradient (G2) and/or a switching time from the first to the second gradient on the basis of a transmission ratio of a gear shift of the vehicle.

4. Method according to Claim 3, **characterized in that**
- the control unit determines the first and/or second gradients (G1, G2) and/or the switching time from the first to the second gradient on the basis of a maximum and/or minimum transmission ratio of the gearshift of the vehicle, or
- **in that** the transmission ratio is determined on the basis of a current transmission ratio which can be detected by means of a sensor.

5. Method according to one of the preceding claims, **characterized in that** the first gradient (G1) and/or the second gradient (G2) and/or the switching time is determined
- on the basis of a vehicle speed and/or
- a torque which is made available by muscle power at the crank drive (2) and/or
- on the basis of a rotational speed which is made available by muscle power at the crank drive (2).

6. Method according to one of the preceding claims, **characterized in that** the powering up of the electric drive (3) is carried out with the first gradient (G1) and/or the second gradient (G2) only over a predetermined time period.

7. Vehicle which can be operated using muscle power and/or motor power, in particular an electric bicycle, comprising:
- a crank drive (2),
- an electric drive (3),
- wherein the electric drive (3) is arranged in the region of the crank drive (2), and
- a control unit (10),
- **characterized in that** the control unit (10) is configured to power up the electric drive to a target rotational speed (Z),
- wherein the powering up is firstly carried out with a first rotational speed gradient (G1) and subsequently with a second rotational speed gradient (G2), and
- wherein the first rotational speed gradient (G1) is greater than the second rotational speed gradient (G2), and
- wherein the inputting of the electric drive (3) into the crank drive (2) is carried out with the second rotational speed gradient (G2).

8. Vehicle according to Claim 7, also comprising a gearshift (6) and a memory which stores a maximum and/or minimum transmission ratio of the gear shift, wherein the control unit (10) is configured to determine the first gradient (G1) and/or the second gradient (G2) on the basis of a maximum and/or minimum transmission ratio of the gearshift (6).

9. Vehicle according to Claim 7 or 8, also comprising a speed sensor which detects a speed of the vehicle (1), wherein the control unit (10) is configured to determine the first gradient (G1) and/or the second gradient (G2) on the basis of the speed of the vehicle.

10. Vehicle according to one of Claims 7 to 9, also comprising a rotational speed sensor which detects a rotational speed applied by muscle power at the crank drive (2) and/or a torque sensor which detects a torque applied by muscle power at the crank drive (2), wherein the control unit (10) is configured to determine the first gradient (G1) and/or the second gradient (G2) on the basis of the detected rotational speed and/or the detected torque at the crank drive (2).

11. Vehicle according to one of Claims 7 to 10, also comprising a sensor for detecting an actual transmission ratio of a gear shift (6), in particular a gear selection sensor which detects a currently engaged gear speed.

## Revendications

1. Procédé de commande d'un mécanisme de propulsion électrique (3) d'un véhicule (1) pouvant fonctionner à la force musculaire et/ou à la force motorisée, notamment une bicyclette électrique, le véhicule (1) comprenant une transmission à manivelle (2) et le mécanisme de propulsion électrique (3) étant monté sur la transmission à manivelle (2), comprenant les étapes suivantes :
- détermination d'une situation de circulation avec laquelle le mécanisme de propulsion électrique (3) doit être utilisé, et
- démarrage du mécanisme de propulsion électrique (3) à une vitesse de rotation cible (Z), tout d'abord avec un premier gradient de vitesse de rotation (G1) et ensuite avec un deuxième gradient de vitesse de rotation (G2), le premier gradient de vitesse de rotation (G1) étant supérieur au deuxième gradient de vitesse de rotation (G2),
- embrayage du mécanisme de propulsion électrique (3) dans la transmission à manivelle (2) avec le deuxième gradient de vitesse de rotation (G2).

2. Procédé selon la revendication 1, le véhicule possédant un mécanisme de changement de rapport avec une démultiplication minimale qui fournit une vitesse de rotation maximale (Y) et une démultiplication maximale qui fournit une vitesse de rotation minimale (X), le mécanisme de propulsion électrique (3) étant démarré avec le premier gradient (G1) à un pourcentage inférieur à 100 %, notamment à 90 %, de la vitesse de rotation minimale (X).

3. Procédé selon l'une des revendications précédentes, **caractérisé en ce qu'**une unité de commande détermine le premier gradient (G1) et/ou le deuxième gradient (G2) et/ou un instant de permutation du premier au deuxième gradient en se basant sur un rapport de démultiplication d'un mécanisme de changement de rapport du véhicule.

4. Procédé selon la revendication 3, **caractérisé en ce que**
- l'unité de commande détermine le premier et/ou le deuxième gradient (G1, G2) et/ou l'instant de permutation du premier au deuxième gradient en se basant sur un rapport de démultiplication maximum et/ou minimum du mécanisme de changement de rapport du véhicule, ou
- **en ce que** le rapport de démultiplication est déterminé en fonction d'un rapport de démultiplication actuel qui peut être détecté au moyen d'un capteur.

5. Procédé selon l'une des revendications précédentes, **caractérisé en ce que** le premier gradient (G1) et/ou le deuxième gradient (G2) et/ou l'instant de permutation sont déterminés
- en fonction d'une vitesse du véhicule, et/ou
- d'un couple qui est délivré à la transmission à manivelle (2) par la force musculaire, et/ou
- en fonction d'une vitesse de rotation qui est délivrée à la transmission à manivelle (2) par la force musculaire.

6. Procédé selon l'une des revendications précédentes, **caractérisé en ce que** le démarrage du mécanisme de propulsion électrique (3) avec le premier gradient (G1) et/ou le deuxième gradient (G2) n'est effectué que pendant une période prédéfinie.

7. Véhicule pouvant fonctionner à la force musculaire et/ou à la force motorisée, notamment bicyclette électrique, comprenant
- une transmission à manivelle (2)
- un mécanisme de propulsion électrique (3)
- le mécanisme de propulsion électrique (3) étant disposé dans la zone la transmission à manivelle (2), et
- une unité de commande (10),
**caractérisé en ce que**
- l'unité de commande (10) est conçue pour démarrer le mécanisme de propulsion électrique (3) à une vitesse de rotation cible (Z),
- le démarrage s'effectuant tout d'abord avec un premier gradient de vitesse de rotation (G1) et ensuite avec un deuxième gradient de vitesse de rotation (G2), et
- le premier gradient de vitesse de rotation (G1) étant supérieur au deuxième gradient de vitesse de rotation (G2), et
- l'embrayage du mécanisme de propulsion électrique (3) dans la transmission à manivelle (2) s'effectuant avec le deuxième gradient de vitesse de rotation (G2).

8. Véhicule selon la revendication 7, comprenant en outre un mécanisme de changement de rapport (6) et une mémoire, laquelle mémorise un rapport de démultiplication maximum et/ou minimum du mécanisme de changement de rapport, l'unité de commande (10) étant conçue pour déterminer le premier gradient (G1) et/ou le deuxième gradient (G2) en se basant sur le rapport de démultiplication maximum et/ou minimum du mécanisme de changement de rapport (6).

9. Véhicule selon la revendication 7 ou 8, comprenant en outre un capteur de vitesse qui détecte une vitesse du véhicule (1), l'unité de commande (10) étant conçue pour déterminer le premier gradient (G1) et/ou le deuxième gradient (G2) en se basant sur la vitesse du véhicule.

10. Véhicule selon l'une des revendications 7 à 9, comprenant en outre un capteur de vitesse de rotation qui détecte une vitesse de rotation appliquée à la transmission à manivelle (2) par la force musculaire et/ou un capteur de couple qui détecter un couple appliqué à la transmission à manivelle (2) par la force musculaire, l'unité de commande (10) étant conçue pour déterminer le premier gradient (G1) et/ou le deuxième gradient (G2) en se basant sur la vitesse de rotation détectée et/ou le couple détecté au niveau de la transmission à manivelle (2).

11. Véhicule selon l'une des revendications 7 à 10, comprenant en outre un capteur destiné à détecter un rapport de démultiplication réel d'un mécanisme de changement de rapport (6), notamment d'un sélecteur de rapport, qui détecte un rapport actuellement engagé.
